# EUROPEAN PATENT APPLICATION

(11) **EP 2 629 244 A1**
(43) Date of publication of application: **21.08.2013**
(21) Application number: 12155562.7
(22) Date of filing: 15.02.2012
(51) Int. Cl.: G06K 19/02, G06K 19/067, D01D 5/00

(54) **Method of generating a tag for an RFID system**

(71) Applicant: Bayer Intellectual Property GmbH, 40789 Monheim (DE)
(72) Inventor: Won Keun, Kim, Gyeonggi-do 463-816 (KR); Chul Jong, Han, Gyeonggi-do 463-816 (KR); Ji Wan, Kim, Gyeonggi-do 463-816 (KR); SooWan, Kim, Seoul 156-712 (KR)
(74) Representative: BIP Patents

(57) **Abstract**

The present invention relates to a method of generating a tag for an RFID system by electrospinning, the method comprising the steps of:
a) spinning a spinning fluid from a spinning nozzle onto the surface of a substrate under the application of an electrical voltage between the substrate or a substrate holder and the spinning nozzle or a spinning nozzle holder to generate the tag structure on the substrate; wherein
b) a spinning fluid is used comprising at least one polymer, carbon nanotubes, and at least one solvent being capable of forming a solution and/or dispersion of the polymer and the carbon nanotubes, wherein the spinning fluid has a viscosity of ≥ 1 to ≤ 10 Pas.

According to this method, a tag for an RFID system may be generated in an especially easy and cost-saving manner. The present invention further relates to a tag for an RFID system, to a smart label, as well as to an RFID system.

## Description

The present invention relates to a method of generating a tag for an RFID system by electrospinning. The present invention further relates to a tag for an RFID system and to an RFID system.

Counterfeiting encompasses violation of intellectual property (IP) rights that are legally enshrined in patents, copyright, trademarks, industrial designs and other forms of intellectual property. Currently, counterfeiting is a worldwide problem that results in the economic loss of hundreds of millions of dollars each year. Both consumers and producers are negatively affected by the influx of counterfeit items into the market. So the anti-counterfeiting for public documents, certificates, and identification cards, and the imitation prevention for expensive goods and medical supplies are raised as important issue for the establishment of an international trust relationship and economic trust society. For the achievement of this goal, various methods such as hologram pattern, watermarks, picture interpolation, and etc. have been attempted but most of them are not perfect and unavailable with cost-effective fabrication process. To overcome these limitations, unique RFID system techniques such as smart label techniques which have outstanding properties for forgery prevention and easy identification with simple fabrication are emerged as a prospective technology. Specifically, anti-counterfeiting technology is desired that is very difficult for counterfeiters to duplicate, and easy for users to positively identify.

Currently, much research has been done on the addition of a unique signal to polymeric materials. Techniques from holograms, UV inks, chip tags, and micro text to name a few have been employed. While these methods may have worked initially, in a products life, counterfeiters now have the technology to replicate many of these items with ease. This problem has increased with the outsourcing of manufacturing. When products are outsourced, anti counterfeiting measures must be applied to both production and packaging. Anytime anti-counterfeiting measures are released elsewhere they are not nearly as reliable. While this may stop counterfeiters for a brief period of time, it will not stop them through the life cycle of the product.

Known from US 2009/0130301 A1 is an apparatus and a method for producing electrically conductive nanostructures by means of electrospinning. This method explicitly focuses on structures having a line width of at most 5 µm on a respective substrate. This method is thus not transferable to a method applicable for generating a tag for an RFID system which structures are much bigger and do thus require other parameters and other requirements.

Document US 7,506,813 B2 describes a method for processing a printed product including, for example, providing a printed product having embedded therein a chipless passive resonator, energizing the resonator, reading a signal emitted from the resonator, processing the signal to generate a unique identifier for the printed product and associating the unique identifier with information relating to the printed product.

Consequently, this document mainly discusses the application of printed products comprising a passive resonator, the generation of these resonators, however, is not focused on.

Known form US 7,653,982 B2 is a method of printing a chipless RFID tag with unique features. The method comprises mainly two printing processes. The first printing process comprises printing an RFID antenna pattern precursor comprising a plurality preprinted wire segments that constitute a majority of the RFID antenna pattern. The second printing process comprises printing a conductive ink to interconnect at least two of said plurality of preprinted wire segments to produce a final RFID chip with a unique antenna geometry. With respect to the ink used, graphite inks or metal inks may be used.

Such a method may be used for generating a transponder for an RFID system. However, due to the fact that at least two printing steps are required, simplification, or acceleration, respectively, may be advantageous.

Consequently, there is the further need for a method of generating a tag for an RFID system, which is easy and cost saving to perform. It is thus an object of the present invention to provide a method of generating a tag for an RFID system, the method being easy and cost-saving to perform.

The present invention relates to a method of generating a tag for an RFID system by electrospinning, the method comprising the steps of:
a) spinning a spinning fluid from a spinning nozzle onto the surface of a substrate under the application of an electrical voltage between the substrate or a substrate holder and the spinning nozzle or a spinning nozzle holder to generate the tag structure on the substrate; wherein
b) a spinning fluid is used comprising at least one polymer, carbon nanotubes, and at least one solvent being capable of forming a solution and/or dispersion of the polymer and the carbon nanotubes, wherein the spinning fluid has a viscosity of ≥ 1 to ≤ 10 Pas.

The term "tag" according to the present invention may particularly mean a transponder element which may form a resonator and which is commonly used in RFID systems as information carrier. The tag may thus generally be used for storing information electronically. The tag is particularly designed for interacting with a transmitter, or reader, respectively, of an RFID system, and may be fixed to several different objects.

An "RFID system" (Radio-frequency identification system) may generally comprise a tag like described above and a reader. The RFID system may work with radio waves in order to transfer data from the tag to the reader. In detail, The RFID reader may emit radio waves and may transmit this radio signal to interrogate, or interact, with the tag. The tag may thus receive the radio waves transmitted by the reader and may respond with its stored information. The RFID system thereby allows identifying and handling the respective object being provided with the tag.

The term "electrospinning" according to the present invention shall particularly mean a process using an electrical charge to spin very fine fibres from a liquid onto a substrate. In detail, a chargeable spinning fluid is provided in a container having a discharge nozzle. The liquid is pressed, or guided, respectively, through the nozzle and, by providing an electrical charge, or voltage, respectively, between the nozzle and the substrate, for example, the liquid becomes charged and is transported to the substrate due to the electrical field. Electrospinning may thereby be a complex process in which the parameters to be met are essentially not transferable from one system to another system. Adjusting the spinning parameter and/or especially the parameters of the spinning fluid, such as viscosity, molecular weight especially of an included polymer, the concentration of the components and further parameters have to be selected in order to achieve the required results.

A "spinning fluid" according to the invention may furthermore be a liquid, which is provided in the container and based of which the spinning process is performed. Consequently, the spinning fluid forms the basis for the structure being generated by the electrospinning process as the structure may comprises all or essentially all of the constituents being present in the spinning fluid.

The present invention provides a method according to which a tag for an RFID system may be generated easily and cost-saving. According to the present invention, it may be possible to build unique identification numbers into articles or onto articles, respectively, via concepts of spatial transforms. Spatial transforms thereby provide a way to access object information according to size, shape, etc.

The method of generating a tag for an RFID system makes use of an electrospinning process. This is a well controllable process which may be performed with low costs resulting in high quality products. In detail, the spinning fluid is provided in a suitable container having a discharge capillary, or a spinning notch, respectively. The method comprises the step of spinning the spinning fluid from the spinning notch onto the surface of a substrate under the application of an electrical voltage between the substrate or a substrate holder and the spinning notch or a spinning notch holder to generate the tag structure. In other words, the electrical voltage, or charge, respectively, may be applied to a place being suitable and leading the spinning fluid to be charged and to be guided to the surface of a substrate.

Thereby, the tag structure is formed. In detail, the structure is applied to the surface of the substrate such, that the provided structure corresponds to the one being desired for the tag. The exact structure may be provided, for example, by moving the substrate and/or the spinning nozzle such, that the liquid is applied to the surface thereby forming the desired structure, like it is generally known in the art. Typical structures, which may be used for generating a tag for an RFID system may comprise single lines having a diameter of ≥ 2 mm to ≤ 5 mm and forming a structure having dimensions of ≥ 10 mm x 10 mm for a small tag or up to ≤ 100 mm x 100 mm for a large tag, for example. However, every suitable structure which may be used for an RFID tag and which may be known in the art may be generated by the described method as well being possibly smaller or larger and dependent from the used parameters, such as exemplary the distance from the nozzle to the substrate, voltage applied, movement of the substrate relative to the nozzle, the viscosity of the spinning fluid, the thickness of the substrate and/or the dielectric constant of the substrate.

The spinning fluid used may comprise at least one polymer, carbon nanotubes and at least one solvent being capable of forming a solution and/or dispersion of the polymer and the carbon nanotubes.

The at least one polymer takes the role of the matrix of the tag structure to be generated on the substrate. It may, however, be solved or dispersed in the solvent which takes the role as solvent and thus as matrix of the spinning fluid. Additionally, the carbon nanotubes take their role as electrically conductive ingredients, which are required for carrying out the electrospinning process as well as for allowing the function of the applied structure to act as RFID tag.

With respect to the solvent, the latter is chosen such, that the polymer is dissolved or dispersed in the solvent and that the carbon nanotubes are dissolved or dispersed in the solvent. It is thereby clear for one skilled in the art that either a solvent comprising only one solvent compound may be used, or a suitable solvent mixture may be appropriate.

Furthermore, the polymer may be any polymer which is suitable of generating a matrix for the RFID tag when being applied to the substrate and which is soluble or dispersable in the same solvent or solvent mixture compared to the used carbon nanotubes.

Carbon nanotubes (CNT), sometimes also referred to as "carbon fibrils" or "hollow carbon flbrils", may typically be cylindrical carbon tubes having a diameter of 3 to 100 nm and a length which may be a multiple of their diameter. Carbon nanotubes may consist of one or more layers of carbon atoms and may be characterized by cores having different morphologies. One common structure of carbon nanotubes is cylindrical, wherein the carbon nanotubes may be either comprised of a single graphene layer (single-wall carbon nanotubes) or of a plurality of concentric graphene layers (multi-wall carbon nanotubes), for example. Standard ways to produce such cylindrical carbon nanotubes may be based in a non-limiting manner on arch discharge, laser ablation, CVD and catalytic CVD processes.

Carbon nanotubes thereby provide access to a new class of RF resonators, or RFID tags, respectively, that could be incorporated into products to deter counterfeiting, for example. Carbon nanotubes are especially preferred for generating RFID tags due to their high electrical conductivity and furthermore because of their aspect ratio.

Additionally to the above defined components, the spinning fluid may comprise further components, such as additives, improving the behavior of the spinning fluid in the electrospinning process and/or improving the behavior of the generated RFID tag in a desired manner. For example, dispersion agents may be provided in order to improve the dispersion behavior of the carbon nanotubes and/or the polymer. Suitable dispersion agents comprise in a non limiting manner glycerin, silane coupling agents and further more. Apart from that, sodium salt of poly styrene sulfonic acid (PSSNa), for example, may be included in order to control the adhesion of pattern to substrate or to control the viscosity and electrospinnability of the fluid.

The spinning fluid furthermore may have a viscosity of ≥ 1 Pas to ≤ 10 Pas. Inventors have found that this viscosity is superb for allowing an electrospinning process for generating structures being suitable for RFID purposes. In detail, the discharge behavior of the spinning fluid out of the discharge nozzle is improved and furthermore the structures applied to the surface of the substrate are stable, so that desired and high quality products may be provided. In detail, such structures have to have dimensions which are small enough in order to allow positioning the tag in essentially any desired place but they have to have a width which is wide enough in order to allow the tag to work properly in RFID purposes. If the viscosity is lower than 1 Pas, electrospinning may be deteriorated because the resulting structure may have a reduced stability. As the viscosity of the solution increases over 10 Pas, however, the spinning liquid cannot squeeze out from electro-spinning nozzle easily. The viscosity may thereby be adjusted by varying the concentration ranges of the respective components. For example, the viscosity of a spinning fluid comprising polyethylene oxide increases linearly in log scale as the PEO concentration increases. The viscosity may thereby be measured as known in the art by a SV-10 vibro viscosimeter at room temperature (25 °C), wherein all samples are stirred by a magnetic stirrer at 150 rpm with a magnetic spin bar. The above described viscosity values thereby show fairly fibrous structure by electrospinning.

The present method provides an easy and cost-saving way in order to generate tags for RFID systems by electrospinning. In detail, the random code of the tag structure, which may be used as unique label, based on carbon nanotubes will be fabricated with ultra-low cost processes which are combined with electrospinning and will be converted as serial code in decibel mode and then used in item tracing and authentication. The electrospinning method may be chosen for CNT/polymer nanocomposite as a radio frequency resonator due to its capability of random patterning.

RFID systems provide a superior and more efficient possibility of, for example, identifying objects, especially compared to a manual system or the use of bar code systems known in the art. Furthermore, RFID tags such as passive RFID and thus those without an energy source such as a battery, and particularly without a chip may work and thus may be read if they are passed in a suitable proximity to an RFID reader. It is not required to have a free sight from the reader to the tag, like it is known from a bar code scanner, for example. Consequently, the tag can be provided in a housing such as inside a case, carton, box or other container. Apart from that and contrary to barcode systems, for example, RFID tags can be read in a large number at the same time.

An RFID system can thus be used in many applications. A tag like described above can be affixed to nearly any object and may be used to track and manage inventory, assets, people, etc. For example, it can be affixed to cars, computer equipment, books, mobile phones, etc. With respect to healthcare industry, RFID systems may be used in order to reduce counting, looking for things and auditing items. Additionally, financial institutions may use RFID systems in order to track key assets and automate compliance. Furthermore, next to identification purposes, the tag may be used with respect of charged particle track imagers, large area gas sensors, tactile sensor arrays and integrated surface temperature controllers and they may have the capability to act as sensor for temperature and/or humidity, for example. In the context of tagging, they are the result of the electro-magnetic (EM) energy scattering that depends on the characteristics of scattering objects, such as the tag.

According to an embodiment, the spinning fluid comprises ≥ 0,05 wt% to ≤ 5 wt%, particularly ≥ 0,1 wt% to ≤ 1,5 wt% carbon nanotubes; ≥ 2 wt% to ≤ 25 wt%, particularly ≥ 5 wt% to ≤ 12 wt% polymer; ≥ 0 wt% to ≤ 20 wt% additives; and ≥ 70 wt% to ≤ 98 wt%, particularly ≥ 85 wt% to ≤ 95 wt% solvent wherein the above defined constituents summarize to a concentration of ≤ 100 wt% (parts by weight) in the spinning fluid. Inventors have found that especially these concentration ranges are especially preferred with respect to electrospinning structures being suitable for RFID tags, especially with respect to the size and/or geometry of the structures to be prepared. In detail, such concentration ranges provide a viscosity which is especially preferred for applying a structure onto a substrate by means of electrospinning. Apart from that, the structure generated on the substrate and acting as an RFID tag may very well store information electrically and may send these information in response to radio frequency waves being emitted from an RFID reader. By using concentration ranges as defined above according to this embodiment, next to adjusting viscosity ranges being especially preferred, an electrical conductivity which is superb either for electrospinning and furthermore for its usage as RFID tag may furthermore be achieved. In detail, a target resistance of ≤ 100 Ohm may be preferred.

According to a further embodiment the carbon nanotubes may have a diameter in the range of ≥ 100 nm to ≤ 6 µm. This allows for the carbon nanotubes used in the spinning fluid and thus in the structure of the tag to be formed in a dimension being approximately ¼ of the resonance frequency of typical radio waves, this frequency being used for contacting the tag and thus being transmitted by the reader of the RFID system. This allows a very effective and secure interaction with the radio frequency waves being emitted from the reader and thus a very effective and secure emission of information. In a non-limiting example, carbon nanotubes being commercially available under the product name baytubes from the firm Bayer MaterialScience may be used.

According to a further embodiment a polar solvent is used which comprises water or which is water. Using water as solvent provides the advantages of a cost-saving usage and an environmental friendly behavior. Apart from that, water is a solvent in which carbon nanotubes and furthermore a broad range of polymers may be dispersed or dissolved in very well. It is thus possible to use preformed solutions of carbon nanotubes and/or of the respective polymer which are obtainable without problems in an industrial scale and with low costs and thus allow easy handling. Apart from that, by using water as solvent, stable solutions and/or dispersions may be provided making the method according to this embodiment especially easy to perform. Furthermore, water is a solvent providing good properties with respect to electrospinning and thus for achieving the desired structure. By using water, additionally commercially available educts, such as carbon nanotubes dispersion may be used which makes the method especially cost-saving. With respect to viscosity, the latter may be adjusted in a very easy and precise manner just by varying the amount of water being present in the spinning fluid applied.

According to a further embodiment a polyether is used as polymer which comprises a compound being selected from the group consisting of or comprising polyethylene oxide and polypropylene oxide. By using a polyether as polymer, an especially durable and stable tag structure may be provided, which is well suitable for smart labels, for example. Apart from that, polyethers such as polyethylene oxide provide the advantage that they are soluble in most polar solvents, such as water, so that only one solvent may be used for mixing a dispersion of carbon nanotubes and the polymer, making the method according to this embodiment especially easy and cost-saving. Furthermore, the above defined polymers mostly do not have negative influences to human beings and are not badly influenced by radio waves, making these polymers especially suitable for the matrix of RFID tags in a very broad application range even in direct contact with human beings and furthermore with a high durability. Additionally, the above defined polymers allow for a well predictable and reliable spinning behavior of the electrospinning process.

According to a further embodiment the spinning fluid or a precursor of the spinning fluid is ultrasonicated and/or revolution-rotation ball milled in particular before the electrospinning process. According to this optional additional mixing step, a very homogeneous and stable spinning solution may be achieved. This results in a homogeneous and well predictable product increasing the quality of the RFID tag being generated and securing that the correct and desired information may be emitted by the tag. Thereby, the spinning fluid may be mixed in the afore defined manner directly before usage and thus with all components being present in the spinning fluid, or a precursor of the spinning fluid and thus a composition to which one or more of the respective components have to be added in order to generate the spinning fluid may be subjected to the above defined mixing step or mixing steps. An ultrasonication may thereby particularly mean a process in which ultrasonic waves are applied to the spinning fluid. For example, ultrasonic waves having a frequency of 20 KHz and 500 watt may be applied to the spinning fluid or a precursor of the latter. Revolution rotation ball milling, furthermore, may be a procedure according to which the spinning fluid may be introduced into a rotatable and especially cylindrical mixing chamber together with mixing balls, which may, for example be ceramic balls or metallic balls. By rotating the mixing chamber in a non-limiting manner through an axis corresponding to the axis of the cylinder, the spinning fluid may be mixed to provide a solution, or a dispersion, in which all components are finely dispersed.

According to a further embodiment, a voltage of ≥ 10kV to ≤ 100kV may be applied. Such voltages are very well suitable for generating a structure being useful as tag for RFID systems by means of electrospinning using the above defined spinning fluid. In detail, spinning fluids having well manageable and well adjustable viscosities may be applied for the electrospinning process, thereby allowing the structures to be formed in a sufficient width and in a well reproducible manner.

The present invention further relates to a tag for an RFID system, the tag being generated by a method according to the invention. Such a tag is very easy and cost-saving to generate and has thus limited costs only. It is thus very well applicable in nearly unlimited applications, even as disposable product. The tag may comprise information in a non-limiting manner in a memory or in its structure as such. The information may especially be enquired and thus be readable by a reader by radiating radio frequency waves onto the tag and thus by electromagnetic energy. The information stored by the tag may be every information suitable. For example, the information may be an identification code.

With respect to further advantages and features of the tag, it is referred to the above statements with respect to the method according to the invention.

According to an embodiment the tag may be formed as a passive tag. The tag may thus be generated without a power source, such as a battery, and/or without an antenna. This allows the tag to be produced and to work in an especially cost-saving manner. The tags which form a resonator may be energized by an external radio frequency power source, such as a reader of an RFID system as known in the art for passive tags. Consequently, by forming the tag as a passive tag, it may be formed solely by the method according to the invention by electrospinning without further crucial steps such as providing a battery and connecting the latter to the tag structure. A passive tag provides the advantages of a very long useful life, such as for twenty years or for an even longer time. The power for communicating is supplied by the reader. When radio waves from the reader are encountered by a passive RFID tag, the resonator which may work as an antenna in case a chip is used, for example, within the tag may form a magnetic field submitting power to the tag allowing energizing the circuits in the tag. The tag may in turn send a broad range of information to the reader, wherein the information may be encoded in the memory and/or in the structure of the tag.

The tag being formed as passive tag may furthermore be much smaller in size. Consequently, especially according to this embodiment, the tag may provide an especially large application range. These kind of tags thus have almost unlimited applications in consumer goods and other areas.

According to a further embodiment the tag may form a smart label or a part of a smart label. A smart label according to the present invention shall particularly mean a flat passive RFID transponder, or tag, respectively which may be applied to a flexible substrate. The substrate may in a non-limiting manner be a paper substrate, a fabric or a plastic substrate, on which the tag may be applied. The tag may form a so called inlay laminated between a rolled substrate and a cover, for example made from the same material as the flexible substrate. The tag may thus be integrated into a number of different products, such as labels, chip cards and furthermore, or they may be applied directly to packages or to pallets or other containments. Consequently, the tag according to the invention may form the smart label as such, or the inlay laminated between a substrate and a cover and thus a part of the smart label.

According to a further embodiment, the tag is formed as a chipless tag. A chipless RFID tag does not make use of a chip, or an integrated circuit, respectively, in order to store information. Contrary thereto, the tag uses its structure and thus the structure formed by electrospinning in order to reflect a portion of the signal being transmitted by a reader. Consequently, a unique return signal is provided by the tag which can be used for submitting information. The information may thus purely be stored in the electromagnetic materials or in its structure. A chipless RFID tag is especially cost saving due to the fact that the tag may be formed solely by the structure being applied by the method according to the invention. Further production steps, such as forming a chip, providing said chip on the substrate, and connecting the chip to the structure, are not required. Consequently, the tag may be generated especially easily and especially cost-saving.

The present invention further relates to a smart label, comprising a tag according to the invention. Especially a smart label may be used as disposable article which is used only once or for one application. Consequently, especially when considering the demands of smart labels, it is advantageous that the latter is formed in an easy and cost-saving manner. A smart label according to the present invention may particularly mean, like stated above, a particularly flat passive RFID transponder, or tag, respectively which may be applied to a flexible substrate. The substrate may in a non-limiting manner be a paper substrate, a fabric or a plastic substrate, on which the tag may be applied. The tag may form a so called inlay laminated between a rolled substrate and a cover, for example made from the same material as the flexible substrate. The tag may thus be integrated into a number of different products, such as labels, chip cards and furthermore, or they may be applied directly to packages or to pallets or other containments. A typical smart label may, exemplarily, comprise the tag being applied to paper, or a plastic film, for example and a coating being applied to the upper side, for example by an adhesive. A further top coating may be applied and/or a release layer, such as a release paper, at the lower side may be provided. Unique smart label techniques have outstanding properties both for production and packaging, forgery prevention and easy identification, for example, with simple and cost-saving fabrication standards. Additionally, smart labels may be provided for curved surfaces, and for products having or requiring a low weight.

With respect to further advantages and features of the smart label, it is referred to the above statements with respect to the method according to the invention.

The present invention further relates to an RFID system, comprising at least one tag according to the invention and at least one reader for communicating with said tag. Consequently, the RFID system according to the invention may comprise a tag like described above having the advantages like described above, and furthermore a reader. A reader according to the present invention shall particularly mean a device which may be designed for transmitting electromagnetic waves, in particular radio waves, and for receiving information of the tag based on the transmitted waves. In case the tag is designed as a passive one, the tag is thereby provided with electric energy. The RFID system according to the present invention may be used for an especially broad application range.

With respect to further advantages and features of the RFID system according to the invention it is referred to the above statements with respect to the inventive method, to the inventive tag, and to the inventive smart label.

The present invention further relates to the use of a tag according to the invention or of a smart label according to the invention for sending information to an RFID reader, in particular for identifying products being equipped with said tag or smart label. The tag and/or the smart label according to the invention are especially well suitable for identifying products equipped therewith. In detail, for identification purposes, the tag may be formed chipless and furthermore passive. Consequently, the tag may be formed solely by the electrospinning process without the demand for providing further elements, such as power sources, microchips and the like. As a result, especially a tag which is used for identification purposes may be produced in a very fast, easy and cost-saving manner. An identification step may thereby comprise a step of a reader communicating with the tag and/or the smart label, thereby receiving identification information from the latter. Such an identification step may be used, for example and in a non-limiting manner, in handling steps of products, and for preventing counterfeiting. By identifying products and thus by an interaction of the reader with the tag, recognition frequencies of ≥ 20 to ≤ 60 GHz may be used. Exemplary recognition distances especially of smart labels between the tag and the reader may be chosen to lie in a range of 0,5 m or less. Addition of unique identification numbers to individual products allows verifying this number by shipping and receiving procedures, for example. Unique identification numbers via concepts of spatial transforms provides a way to access object information according to size, shape, etc. The risk of the identification number to be copied is significantly decreased. In the context of tagging, they are the result of electro-magnetic energy scattering that depends on the characteristics of scattering objects, i.e. tags. For example, the data encoded in the received electromagnetic energy may be a function of the intrinsic and/or the extrinsic properties of the reflecting objects, such as included physical dimensions relative to the wavelength of the illuminating electromagnetic energy.

The present invention further relates to the use of a spinning fluid for generating an RFID tag by electrospinning, wherein the spinning fluid comprises at least one polymer, particularly a polyether, especially polyethylene oxide and/or polypropylene oxide, carbon nanotubes, particularly with a diameter in the range of ≥ 100 nm to ≤ 6µm, and at least one solvent being capable of forming a solution and/or dispersion of the polymer and the carbon nanotubes, particularly polar solvent, especially water, wherein the spinning fluid has a viscosity of ≥ 1 to ≤ 10 Pas and wherein the spinning fluid particularly comprises ≥ 0,05 wt% to ≤ 5 wt%, particularly ≥ 0,1 wt% to ≤ 1,5 wt% carbon nanotubes; ≥ 2 wt% to ≤ 25 wt%, particularly ≥ 5 wt% to ≤ 12 wt% polymer; ≥ 0 wt% to ≤ 20 wt% additives; and ≥ 70 wt% to ≤ 98 wt%, particularly ≥ 85 wt% to ≤ 95 wt% solvent wherein the above defined constituents summarize to a concentration of ≤ 100 wt% (parts by weight) in the spinning fluid.

The present invention is subsequently described with regard to embodiments and with respect to the figures, without being limited to the following description.

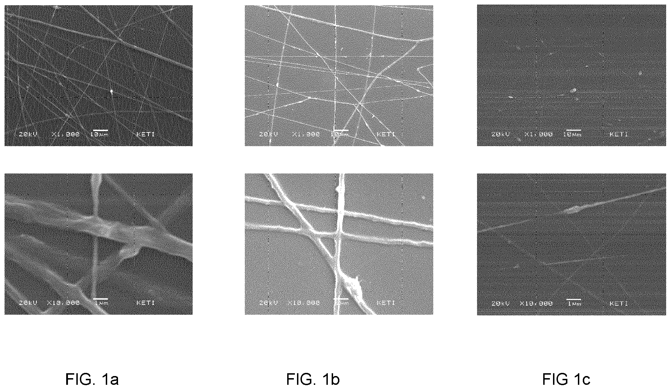

FIG. 1 shows SEM images of structures being obtained by electrospinning by using the method according to the invention.

### Examples

Different inventive examples as well as comparative examples of spinning fluids were generated and their ability for usage in an electrospinning process were evaluated in order to show the inventive effect.

With respect to the materials used for generating the spinning fluids, carbon nanotubes were used as Baytubes liquid (Baytube C150P dispersion), being a dispersion of carbon nanotubes in water and being commercially available under its name from the company Bayer MaterialScience, and Polyethylene oxide was used as polymer having a molecular weight of essentially 100.000 and being commercially available by Aldrich Chemical Co Ltd. Furthermore, conventional deionized water was used as solvent.

The respective mixtures of polyethylene oxide, carbon nanotubes and water were mixed on a Super Mixer ARE3100 for 3 hours with a zirconia bead mill, and then the mixture was ultrasonicated with a Brand sonicator. Afterwards, the generated spinning liquids were spun onto a substrate in order to generate a tag structure.

The electro-spinning apparatus comprised a programmable syringe pump and a high voltage supply was manufactured by Nano NC machinery. Electro-spinning was performed with a 16 G needle at 1 ml/hr and with an applied voltage of 15 kV. A nonwoven fabric was formed on a grounded aluminium or paper collector which was placed at a distance of 10 cm from the spinning nozzle, wherein generally and not bound to this example distances of ≥ 5 cm to ≤ 20 cm may be appropriate. The applied fabric, i.e. the tag structure, was air dried for approximately 2 hours before storage in a desicator. The nozzle used had an inner diameter of 50 µm, +/- 2 µm and a length of 50 mm +/- 2 mm

The resistivity of the pattern was measured by probe station system with Agilent 4156C parameter analyzer.

The following examples 1 to 3 were performed according to the invention, whereas comparative examples 1 and 2 are non-inventive examples.

### Example 1:

30wt% PEO water solution was made with 70 mL of distilled water and 30 g of PEO (Mw: 100,000). The mixture was mixed by rotation-revolution mixer at 2000 rpm for 30 min with 5 of 3mm zirconia ball. 5 g of 30 wt% PEO solution and 5 g of 5 wt% baytube solution was mixed again with rotation evolution mixer at 2000 rpm for 30 min with 5 of 3 mm zirconia ball. Resulting solution is named as (15:2.5) solution because the ratio of PEO and CNT and H₂O is 15:2.5:82.5. After the addition of 15 mL of water for viscosity control, a solution comprising 6 wt.-% PEO, 1 wt% CNT and 93 wt% of water was obtained. This solution is electrospinnable and SEM analysis shows fibrous structure after electrospinning.

### Example 2:

30 wt% PEO water solution was made with 70 mL of distilled water and 30 g of PEO (Mw : 100,000). The mixture was mixed by rotation-revolution mixer at 2000 rpm for 30 min with 5 of 3mm zirconia ball. 7.5 g of 30 wt% PEO solution and 2.5 g of 5 wt% baytube solution was mixed again with rotation evolution mixer at 2000 rpm for 30 min with 5 of 3 mm zirconia ball. Resulting solution is named as (22.5:1.25) solution because the ratio of PEO, CNT and water is 22.5:1.25:76.25. After the addition of 15 mL of water for viscosity control, a solution comprising 9 wt% PEO, 0,5 wt% CNT and 90,5 wt% of water was obtained This solution is electrospinnable and SEM analysis shows fibrous structure after electrospinning.

### Example 3:

30 wt% PEO water solution was made with 70 mL of distilled water and 30 g of PEO (Mw : 100,000). The mixture was mixed by rotation-revolution mixer at 2000 rpm for 30 min with 5 of 3 mm zirconia ball. 9 g of 30 wt% PEO solution and 1 g of 5 wt% baytube solution was mixed again with rotation evolution mixer at 2000 rpm for 30 min with 5 of 3 mm zirconia ball. Resulting solution is named as (27:0.5) solution because the ratio of PEO, CNT and water is 27:0.5:72.5. After the addition of 15 mL of water for viscosity control, a solution comprising 10,8 wt% PEO, 0,2 wt% CNT and 89 wt% of water was obtained This solution is electrospinnable and SEM analysis shows fibrous structure after electrospinning.

### Comparative Example 1:

15wt% PEO water solution was made with 85mL of distilled water and 15 g of PEO (Mw : 100,000). The mixture was mixed by rotation-revolution mixer at 2000 rpm for 30 min with 5 of 3mm zirconia ball. This solution was electrospinnable. However, SEM analysis of the applied structure does not show a fiber structure, but a dot structure is generated instead.

### Comparative Example 2:

40 wt% PEO water solution was made with 60 mL of distilled water and 40 g of PEO (Mw : 100,000). The mixture was mixed by rotation-revolution mixer at 2000 rpm for 30 min with 5 of 3 mm zirconia ball. This solution has too high viscosity and has thus only very reduced electrospinning suitability.

The structures being generated by electrospinning under use of inventive examples 1 to 3 are shown in figures 1a to 1c. In detail figure 1a shows the structures obtained by example 3 (PEO solution : CNT solution: 9: 1; PEO 27 wt%, CNT 0.5 wt%, H₂O 72.5 wt%), figure 1b shows the example 2 (PEO solution : CNT solution: 3: 1; PEO 9 wt%, CNT 0,5 wt%, H₂O 90,5 wt%), and figure 1 c shows example 1 (PEO solution : CNT solution: 1: 1, PEO 6 wt%, CNT 1 wt%, H₂O 93 wt%).

It could be demonstrated that all inventive examples showed good electrospinning behavior and furthermore structures coud be achieved which were well applicable as tag for an RFID system. By the electro-spinning tests, high viscosity solutions with low CNT content show better fibrous structure than low viscosity solution with high CNT content. Because the used CNT solution had a high content of water, an increasing CNT content also increases water content. To overcome this situation, use of higher wt% CNT solution or highly concentrated PEO solution is may be preferred.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. Method of generating a tag for an RFID system by electrospinning, the method comprising the steps of:
a) spinning a spinning fluid from a spinning nozzle onto the surface of a substrate under the application of an electrical voltage between the substrate or a substrate holder and the spinning nozzle or a spinning nozzle holder to generate the tag structure on the substrate; wherein
b) a spinning fluid is used comprising at least one polymer, carbon nanotubes, and at least one solvent being capable of forming a solution and/or dispersion of the polymer and the carbon nanotubes, wherein the spinning fluid has a viscosity of ≥ 1 to ≤ 10 Pas.

2. Method according to claim 1, **characterized in that** the spinning fluid comprises
- ≥ 0,05 wt% to ≤ 5 wt% carbon nanotubes;
- ≥ 2 wt% to ≤ 25 wt% polymer;
- ≥ 0 wt% to ≤ 20 wt% additives; and
- ≥ 70 wt% to ≤ 98 wt% solvent,
wherein the above defined constituents summarize to a concentration of ≤ 100 wt% in the spinning fluid.

3. Method according to claim 1 or 2, **characterized in that** the carbon nanotubes may have a diameter in the range of ≥ 100 nm to ≤ 6µm.

4. Method according to any of the preceding claims, **characterized in that** a polar solvent is used which comprises water or is water.

5. Method according to any of the preceding claims, **characterized in that** a polyether is used as polymer which comprises a compound being selected from the group consisting of polyethylene oxide and polypropylene oxide.

6. Method according to any of the preceding claims, **characterized in that** the spinning fluid or a precursor of the spinning fluid is ultrasonicated and/or revolution-rotation ball milled.

7. Method according to any of the preceding claims, **characterized in that** a voltage of ≥ 10 kV to ≤ 100 kV is applied.

8. Tag for an RFID system, **characterized in that** the tag is generated by a method according to any of claims 1 to 7.

9. Tag according to claim 8, **characterized in that** the tag is formed as a passive tag.

10. Tag according to any of claims 8 or 9, **characterized in that** the tag forms a smart label or a part of a smart label.

11. Tag according to any of claims 8 to 10, **characterized in that** the tag is formed as a chipless tag.

12. Smart label, comprising a tag according to any of claims 8 to 11.

13. RFID system, comprising at least one tag according to any of claims 8 to 11, and at least one reader for communicating with said tag.

14. Use of a tag according to any of claims 8 to 11 or of a smart label according to claim 12 for sending information to an RFID reader.

15. Use of a spinning fluid for generating an RFID tag by electrospinning, **characterized in that** the spinning fluid comprises at least one polymer, particularly a polyether, especially polyethylene oxide and/or polypropylene oxide, carbon nanotubes, particularly with a diameter in the range of ≥ 100 nm to ≤ 6µm, and at least one solvent being capable of forming a solution and/or dispersion of the polymer and the carbon nanotubes, particularly a polar solvent, especially water, wherein the spinning fluid has a viscosity of ≥ 1 to ≤ 10 Pas and wherein the spinning fluid particularly comprises ≥ 0,05 wt% to ≤ 5 wt%, particularly ≥ 0,1 wt% to ≤ 1,5 wt% carbon nanotubes; ≥ 2 wt% to ≤ 25 wt%, particularly ≥ 5 wt% to ≤ 12 wt% polymer; ≥ 0 wt% to ≤ 20 wt% additives; and ≥ 70 wt% to ≤ 98 wt%, particularly ≥ 85 wt% to ≤ 95 wt% solvent wherein the above defined constituents summarize to a concentration of ≤ 100 wt% (parts by weight) in the spinning fluid.
